(19) **Europäisches Patentamt / European Patent Office / Office européen des brevets**

(11) **EP 4 042 249 B1**

(12) **FASCICULE DE BREVET EUROPEEN**

(45) Date de publication et mention de la délivrance du brevet:
**20.09.2023 Bulletin 2023/38**

(21) Numéro de dépôt: **20793762.4**

(22) Date de dépôt: **07.10.2020**

(51) Classification Internationale des Brevets (IPC):
**G05B 19/401** (2006.01)

(52) Classification Coopérative des Brevets (CPC):
**G05B 19/401;** G05B 2219/37525

(86) Numéro de dépôt international:
**PCT/FR2020/051767**

(87) Numéro de publication internationale:
**WO 2021/069837 (15.04.2021 Gazette 2021/15)**

(54) **PROCÉDÉ ET DISPOSITIF DE CONTROLE DE CONFORMITE D'UNE PIECE**

**VERFAHREN UND VORRICHTUNG ZUM ÜBERPRÜFEN DER NACHGIEBIGKEIT EINES WERKSTÜCKS**

**METHOD AND DEVICE FOR CHECKING THE COMPLIANCE OF A WORKPIECE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.10.2019 FR 1911075**

(43) Date de publication de la demande:
**17.08.2022 Bulletin 2022/33**

(73) Titulaires:
• **SAFRAN AIRCRAFT ENGINES**
  **75015 Paris (FR)**
• **SAFRAN**
  **75015 Paris (FR)**

(72) Inventeurs:
• **DESCOQS, Augustin, Marie, Michel**
  **77550 MOISSY-CRAMAYEL (FR)**
• **RICORDEAU, Julien, Alexis, Louis**
  **77550 MOISSY-CRAMAYEL (FR)**
• **SULLI, Quentin**
  **77550 MOISSY-CRAMAYEL (FR)**

(74) Mandataire: **Cabinet Beau de Loménie**
  **158, rue de l'Université**
  **75340 Paris Cedex 07 (FR)**

(56) Documents cités:
**US-A1- 2011 282 480     US-A1- 2015 276 558**
**US-A1- 2018 150 038**

**EP 4 042 249 B1**

**Description**

DOMAINE DE L'INVENTION

Le présent exposé concerne un procédé de contrôle de conformité d'une pièce, et plus particulièrement un procédé permettant d'améliorer l'efficacité du contrôle qualité en milieu industriel.

ARRIÈRE-PLAN TECHNOLOGIQUE

Dans un processus de fabrication, une pièce est définie par des spécifications qui peuvent porter sur ses dimensions, ses matériaux, ses contraintes internes, etc. Ces spécifications sont généralement assorties de tolérances, c'est-à-dire d'un écart maximal toléré par rapport à la valeur nominale des spécifications. Dans le cadre du contrôle qualité, l'on vérifie que la pièce est conforme à ses spécifications, c'est-à-dire que les caractéristiques de la pièce ne s'écartent pas davantage de leur valeur nominale que ce qui est permis par la tolérance.

Le contrôle qualité peut représenter un temps supplémentaire important dans le processus de fabrication. Ce temps est particulièrement significatif pour les pièces produites en très grande quantité.

Afin de diminuer ce temps et de gagner en productivité, des méthodes majoritairement statistiques ont été imaginées pour ne contrôler qu'un échantillon réduit de pièces et en déduire la conformité d'un lot plus grand. Ces méthodes apportent satisfaction pour des pièces dont la fiabilité n'est que moyennement critique.

En revanche, pour des pièces dont la fiabilité est critique, ces méthodes ne sont pas adaptées car il est difficile, sinon impossible, de démontrer que le risque de ne pas détecter une non-conformité est faible. Ainsi, il existe un besoin pour un nouveau procédé de contrôle de conformité d'une pièce, qui soit efficace en temps et présente un risque de non-détection de conformité réduit.

Un procédé de ce type a déjà été proposé dans le document FR 3 063 153 A1. Le document US 2018/150038 A1 divulgue quant-à-lui l'estimation du risque de non-conformité de la caractéristique d'une pièce sur la base d'une loi de probabilité associée à cette caractéristique.

PRÉSENTATION DE L'INVENTION

Le présent exposé vise à répondre au moins partiellement à ce besoin.

Le présent exposé concerne un procédé de contrôle de conformité d'une pièce présentant au moins une caractéristique, le procédé comprenant les étapes suivantes :

- estimer un risque de non-conformité de la caractéristique sur la base d'une loi de probabilité associée à la caractéristique ; et
- vérifier si le risque de non-conformité estimé satisfait un critère de décision et, dans l'affirmative, déclarer que la pièce est conforme pour la caractéristique ; dans la négative, mesurer une valeur de la caractéristique, déterminer si la pièce est conforme ou non sur la base de la valeur ainsi mesurée, et mettre à jour la loi de probabilité associée à la caractéristique sur la base de la valeur ainsi mesurée.

En utilisant une loi de probabilité qui est mise à jour à chaque mesure réelle effectuée sur la pièce de la façon qui vient d'être décrite, on permet au procédé de contrôle d'être auto-adaptatif vis-à-vis des éventuelles dérives de production. En outre, cette auto-adaptation ne nécessite aucune invention d'un expert humain.

Dans certains modes de réalisation, le critère de décision comprend un premier critère consistant à vérifier que le risque de non-conformité estimé est inférieur à un seuil fixe.

Dans certains modes de réalisation, le critère de décision comprend un deuxième critère consistant à vérifier qu'une valeur qui est fonction du risque de non-conformité estimé et des risques de non-conformité estimés des pièces pour lesquelles le critère de décision a été précédemment appliqué est inférieure à un seuil qui est fonction du nombre desdites pièces.

Dans certains modes de réalisation, ladite valeur est seulement fonction du risque de non-conformité estimé et des risques de non-conformité estimés des pièces pour lesquelles le critère de décision a été précédemment satisfait.

Dans certains modes de réalisation, la loi de probabilité est mise à jour par une méthode de Monte Carlo séquentielle.

Dans certains modes de réalisation, la pièce présente p caractéristiques, où p est un nombre entier au moins égal à 2, et les étapes d'estimation d'un risque de non-conformité et de vérification d'un critère de décision sont effectuées pour chacune des p caractéristiques.

Dans certains modes de réalisation, lorsque le critère de décision n'est pas satisfait pour au moins une des p caractéristiques :

- on établit une liste desdites au moins une caractéristiques pour lesquelles le critère de décision n'est pas satisfait,
- on établit une liste d'opérations de mesure sur la base de ladite liste desdites au moins une caractéristiques pour lesquelles le critère de décision n'est pas satisfait et d'un arbre de dépendance associant chacune des p caractéristiques à au moins une opération de mesure pouvant être effectuée sur la pièce,
- on établit en outre une liste de caractéristiques supplémentaires de la pièce, ladite liste de caractéristiques supplémentaires comprenant au moins une partie des caractéristiques pouvant être mesurées en effectuant les opérations de mesure de ladite liste d'opérations de mesure, sur la base de ladite liste d'opérations de mesure ;
- on mesure une valeur de chacune desdites au moins une caractéristiques pour lesquelles le critère de décision n'est pas satisfait et une valeur de chacune des caractéristiques de ladite liste de caractéristiques supplémentaire, et
- on met à jour chacune des lois de probabilité associées à chacune desdites au moins une caractéristiques pour lesquelles le critère de décision n'est pas satisfait et chacune des lois de probabilités associées auxdites caractéristiques supplémentaires sur la base des valeurs ainsi mesurées.

De cette manière, le procédé exploite au maximum les informations pouvant être tirées des opérations de mesure que, en fonction du résultat de l'étape de vérification du critère de décision, il est de toute façon nécessaire d'effectuer.

Le présent exposé concerne également un procédé de suivi de fabrication de pièces, comprenant les étapes suivantes :

- fournir une pluralité de pièces du même type ; et
- contrôler la conformité de chacune de ces pièces par le procédé de contrôle précédemment décrit.

Dans certains modes de réalisation, on contrôle la conformité de chacune desdites pièces dans l'ordre dans lequel elles sont fournies.

Dans d'autres modes de réalisation, on contrôle la conformité de chacune desdites pièces dans un ordre différent de celui dans lequel elles sont fournies.

Dans certains modes de réalisation, on contrôle la conformité de chacune desdites pièces dans un ordre différent de celui dans lequel elles sont fournies, et on mesure une valeur de la au moins une caractéristique de chacune des pièces qui est contrôlée dans l'ordre contraire de celui dans lequel elles sont fournies, indépendamment du risque de non-conformité estimé pour chacune desdites au moins une caractéristique.

Dans d'autres modes de réalisation, on contrôle la conformité de chacune desdites pièces dans un ordre différent de celui dans lequel elles sont fournies, on met en mémoire toutes les valeurs mesurées, et, avant d'estimer le risque de non-conformité d'une pièce, on met à jour la loi de probabilité associée à chacune desdites au moins une caractéristiques de ladite pièce sur la base des valeurs mesurées mises en mémoire.

De cette manière, l'estimation du risque de non-conformité est basée sur davantage de points de données de mesures, et est donc plus fiable. Le procédé de suivi est alors encore plus robuste aux dérives de production.

Dans un mode particulier de réalisation, les différentes étapes du procédé de contrôle ou de suivi sont déterminées par des instructions de programmes d'ordinateur.

En conséquence, l'invention vise aussi un programme sur un support d'information, ce programme étant susceptible d'être mis en oeuvre dans un dispositif de contrôle ou plus généralement dans un ordinateur, ce programme comportant des instructions adaptées à la mise en oeuvre des étapes d'un procédé de contrôle ou de suivi tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur ou par un microprocesseur, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD-ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Le présent exposé concerne également un dispositif de contrôle de conformité d'une pièce, comprenant présentant au moins une caractéristique, comprenant une machine de mesure configurée pour mesurer une valeur de ladite au moins une caractéristique, un module de contrôle, des moyens de transmission configurés pour transmettre des valeurs mesurées de la machine de mesure au module de contrôle et transmettre des instructions du module de contrôle à la machine de mesure, le module de contrôle étant configuré pour estimer un risque de non-conformité de la caractéristique sur la base d'une loi de probabilité associée à la caractéristique, pour vérifier si le risque de non-conformité estimé satisfait un critère de décision et pour, dans l'affirmative, déclarer que la pièce est conforme pour la caractéristique ; le module de contrôle étant configuré pour, dans la négative, commander à la machine de mesure de mesurer une valeur de la caractéristique, pour déterminer si la pièce est conforme ou non sur la base de la valeur ainsi mesurée, et pour mettre à jour la loi de probabilité associée à la caractéristique sur la base de la valeur ainsi mesurée.

Un tel dispositif peut être utilisé pour la mise en oeuvre du procédé de contrôle ou du procédé de suivi précédemment décrit. En outre, le dispositif peut comprendre tout ou partie des caractéristiques détaillées précédemment au sujet du procédé.

BRÈVE DESCRIPTION DES DESSINS

L'invention et ses avantages seront mieux compris à la lecture de la description détaillée qui suit, de modes de réalisation de l'invention donnés à titre d'exemples non limitatifs. Cette description se réfère aux dessins annexés, sur lesquels :

[Fig. 1] la figure 1 est un schéma-blocs représentant un procédé de contrôle et un procédé de suivi selon un premier mode de réalisation ;
[Fig. 2] la figure 2 est un schéma-blocs représentant un procédé de contrôle et un procédé de suivi selon un deuxième mode de réalisation ;
[Fig. 3] la figure 3 est un schéma-blocs représentant une sous-partie du schéma-bloc de la figure 2 ;
[Fig. 4A-4B] les figures 4A à 4D sont des diagrammes expliquant, sur un exemple concret, les étapes du schéma-bloc de la figure 3 ;
[Fig. 4C-4D] les figures 4A à 4D sont des diagrammes expliquant, sur un exemple concret, les étapes du schéma-bloc de la figure 3 ;
[Fig. 5A] la figure 5A est un schéma-bloc représentant un procédé de contrôle et un procédé de suivi selon un troisième mode de réalisation ;
[Fig. 5B] les figures 5B et 5C sont des diagrammes expliquant, sur un exemple, le fonctionnement des procédés de la figure 5A ;
[Fig. 5C] les figures 5B et 5C sont des diagrammes expliquant, sur un exemple, le fonctionnement des procédés de la figure 5A ;
[Fig. 6A] la figure 6A est un schéma-bloc représentant un procédé de contrôle et un procédé de suivi selon un quatrième mode de réalisation ;
[Fig. 6B] les figures 6B et 6C sont des diagrammes expliquant, sur un exemple, le fonctionnement des procédés de la figure 6A ;
[Fig. 6C] les figures 6B et 6C sont des diagrammes expliquant, sur un exemple, le fonctionnement des procédés de la figure 6A ;
[Fig. 7] la figure 7 représente schématiquement un dispositif de contrôle.

DESCRIPTION DÉTAILLÉE DE L'INVENTION

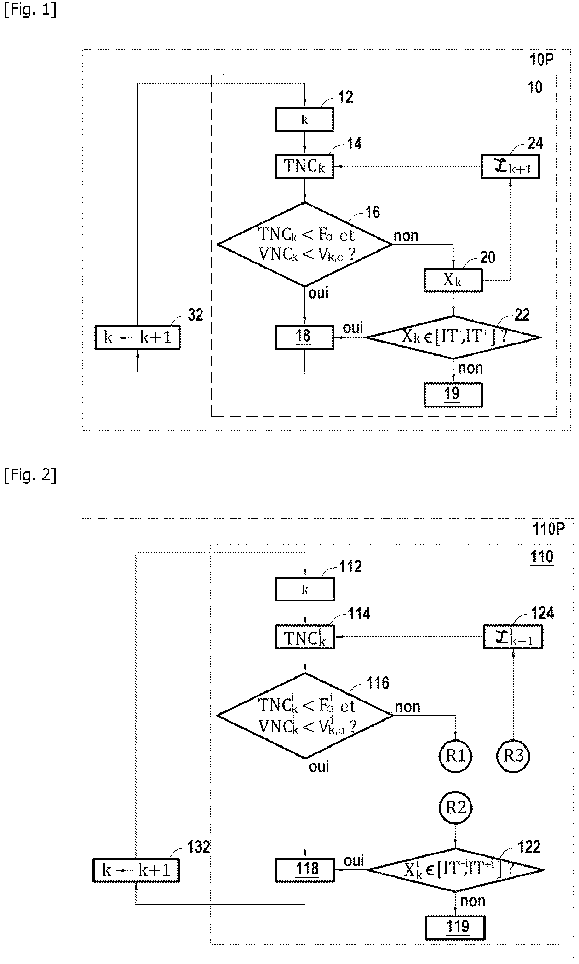

Un procédé de contrôle de conformité d'une pièce selon un premier mode de réalisation va être décrit en référence à la figure 1, qui illustre schématiquement les étapes dudit procédé.

Le procédé de contrôle de conformité d'une pièce 10 comprend une étape de fourniture 12 d'une pièce k.

Dans le premier mode de réalisation, la pièce k présente une caractéristique $X$ dont on souhaite vérifier la conformité. Dans la suite, les notations présentant en indice la lettre k se rapportent à la pièce k dont on contrôle la conformité au cours du procédé de contrôle 10.

Dans un exemple, la caractéristique $X$ est une cote dimensionnelle mesurée sur la pièce k.

La conformité de la caractéristique $X$ est définie par une valeur nominale $N$, une tolérance supérieure $IT^+ > N$, et une tolérance inférieure $IT^- < N$. Ainsi, une valeur de la caractéristique $X$ est considérée comme conforme lorsqu'elle appartient à l'intervalle $[IT^-, IT^+]$, où $N \in [IT^-, IT^+]$.

La pièce k étant fournie, on passe à l'étape d'estimation 14 au cours de laquelle on estime un risque de non-conformité $TNC_k$ de la pièce k. Ce risque de non-conformité $TNC_k$ est estimé sur la base d'une loi de probabilité associée à la caractéristique $X$ comme cela sera détaillé plus loin.

Le procédé de contrôle 10 comprend ensuite une étape de vérification 16 au cours de laquelle on vérifie que le risque de non-conformité estimé $TNC_k$ obtenu au cours de l'étape d'estimation 14 satisfait un critère de décision.

Si le résultat de l'étape de vérification 16 est positif, c'est-à-dire que le risque de non-conformité estimé $TNC_k$ satisfait le critère de décision, le procédé passe à l'étape 18 dans laquelle la pièce k est déclarée conforme pour la caractéristique*X*. Comme cela sera détaillé plus loin, le critère de décision est fonction d'un niveau de risque a de non-conformité acceptable.

Si, à l'inverse, le résultat de l'étape de vérification 16 est négatif, c'est-à-dire que le risque de non-conformité estimé $TNC_k$ ne satisfait pas le critère de décision, le procédé passe à l'étape de mesure 20 au cours de laquelle la valeur réelle $X_k$ de la caractéristique $X$ est mesurée.

Le fait que le critère de décision soit satisfait à l'étape 16 indique alors que le risque de non-conformité estimé $TNC_k$ implique un risque réel de non-conformité suffisamment faible pour être acceptable compte tenu du niveau de risque $\alpha$. Le fait que le critère de décision ne soit pas satisfait à l'étape 16 indique que le risque de non-conformité estimé $TNC_k$ implique un risque réel de non-conformité qui n'est pas suffisamment faible pour être acceptable compte tenu du niveau de risque $\alpha$. Des exemples de critères de décision seront détaillés plus loin.

Une fois que la valeur réelle $X_k$ de la caractéristique $X$ est mesurée, le procédé passe à l'étape de contrôle 22 pendant laquelle on vérifie si $X_k$ est conforme. Si $X_k$ est conforme, c'est-à-dire que $X_k \in [IT^-, IT^+]$, le procédé passe à l'étape 18 dans laquelle la pièce k est déclarée conforme pour la caractéristique $X$. À l'inverse, si $X_k$ n'est pas conforme, le procédé passe à l'étape 19 dans laquelle la pièce k est déclarée non-conforme.

Comme on l'a mentionné précédemment, le risque de non-conformité estimé $TNC_k$ est estimé sur la base d'une loi de probabilité $\mathcal{L}_k$ associée à la caractéristique *X,* c'est-à-dire que $TNC_k = \mathbb{P}(y_k \notin {}_{[IT^-, IT^+]})$, où $y_k$ est supposé suivre la loi de probabilité $\mathcal{L}_k$.

En outre, la loi de probabilité $\mathcal{L}_k$ est mise à jour sur la base de la valeur réelle $X_k$ de la caractéristique $X$. Plus précisément, comme représentée sur la figure 1, si l'étape de mesure 20 a été effectuée, le procédé de contrôle 10 effectue également l'étape de mise à jour 24 dans laquelle la loi de probabilité $\mathcal{L}_k$ est mise à jour afin d'obtenir une loi de probabilité mise à jour $\mathcal{L}_{k+1}$.

Dans ce mode de réalisation, la loi de probabilité $\mathcal{L}_k$ est mise à jour par une méthode de Monte Carlo séquentielle, aussi connue sous les noms de « filtre particulaire » ou encore de « filtre à particules ». Une telle méthode est bien connue dans la littérature et n'est donc pas décrite en détail ici. On rappelle seulement ici que dans une telle méthode, on se fixe un modèle de distribution $M(y|\theta)$ des mesures, la distribution pouvant être de tout type approprié (par exemple une distribution gaussienne, une distribution de Weibull, ou une distribution bimodale), et dont les paramètres $\theta$ ne sont pas connus exactement. Les paramètres $\theta$ sont donc décrits eux-mêmes par une distribution empirique $P_k(\theta)$. Lorsqu'une nouvelle observation est disponible, c'est-à-dire lorsqu'on dispose d'une valeur réelle $X_k$, la distribution empirique $P_k(\theta)$ est révisée en fonction de la valeur réelle $X_k$, puis dérive selon un mouvement brownien. On obtient alors une nouvelle distribution empirique $P_{k+1}(\theta)$. Les calculs nécessaires à cette opération sont menés de façon approchée par une simulation de Monte Carlo. Enfin, connaissant $P_{k+1}(\theta)$, on obtient la distribution attendue $\mathcal{L}_{k+1}$ de la mesure $X_{k+1}$ sur la pièce k+1, en intégrant le produit $P_{k+1}(\theta) \times M(x|\theta)$ sur toutes les valeurs possibles des paramètres $\theta$.

En tout état de cause, à l'issue de l'étape de mise à jour 24, on obtient une loi de probabilité $\mathcal{L}_{k+1}$ mise à jour, laquelle est stockée en mémoire afin de pouvoir estimer le risque de non-conformité de la pièce k+ 1.

En utilisant une loi de probabilité qui est mise à jour à chaque mesure réelle effectuée sur la pièce de la façon qui vient d'être décrite, on permet au procédé de contrôle 10 d'être auto-adaptatif vis-à-vis des éventuelles dérives de production.

En alternative à une méthode de Monte Carlo séquentielle, il est possible d'utiliser aussi une méthode du type Weighted Moving Average (WMA) ou du type AutoRegressive Integrated Moving Average (ARIMA). Ces méthodes sont bien connues dans la littérature et ne sont donc pas décrites en détail ici. Néanmoins, une méthode de Monte Carlo séquentielle est préférable, pour les deux raisons suivantes. Premièrement, le recours à une méthode de Monte Carlo permet de trouver la distribution empirique $P_{k+1}(\theta)$ de façon approchée, même dans le cas où il ne serait pas possible de la trouver exactement (ce qui est le cas dès que la distribution dont les paramètres $\theta$ ne sont pas connus exactement ne suit pas une loi gaussienne. Deuxièmement, puisqu'il s'agit d'une méthode séquentielle, elle est compatible avec une estimation bayésienne du risque de non-conformité $TNC_k$. Initialement, l'estimation du risque de non-conformité $TNC_k$ devient de plus en plus précise, grâce à la prise en compte des premières mesures réelles effectuées sur les premières pièces ; puis ce gain en précision est compensé par de la dérive selon un mouvement brownien à chaque mise à jour, ce qui conduit à un état quasi-stationnaire de l'estimation du risque de non-conformité $TNC_k$.

On va maintenant détailler un exemple du critère de décision qui est utilisé à l'étape de décision 16 pour décider si la pièce k doit être effectivement contrôlée, c'est-à-dire pour décider s'il est nécessaire ou non de procéder à l'étape de mesure 20.

Le critère de décision comprend un premier critère consistant à vérifier que le risque de non-conformité estimé $TNC_k$ est inférieur à un seuil fixe $F_a$, c'est-à-dire à vérifier que $TNC_k < F_a$. Par « fixe », on entend ici que le seuil dépend du niveau de risque $\alpha$ de non-conformité acceptable mais ne dépend pas du nombre de pièces déjà contrôlées, c'est-à-dire ne dépend pas de k. Le seuil fixe $F_\alpha$ peut ainsi être un multiple de $\alpha$, c'est-à-dire que $F_\alpha = m \times \alpha$ où $m$ est un nombre réel convenablement choisi. Le premier critère peut alors s'écrire $TNC_k < m \times \alpha$. On peut par exemple retenir une valeur de $m = 10$. Le seuil fixe $F_\alpha$ représente ainsi le risque maximum de non-conformité qui est considéré comme acceptable sur une seule pièce.

En prévoyant le premier critère, on procède à un contrôle effectif de la pièce k dès que la loi de probabilité indique un risque trop important de non-conformité de la pièce k. Ceci contribue à rendre le procédé de contrôle 10 robuste aux dérives de production.

Le critère de décision comprend en outre un deuxième critère consistant à vérifier qu'une valeur $VNC_k$ qui est fonction du risque de non-conformité estimé $TNC_k$ et des risques de non-conformité estimés des pièces pour lequel le critère de décision a été précédemment appliqué est inférieure à un seuil $V_{k,a}$, c'est-à-dire à vérifier que $VNC_k < V_{k,a}$. Le seuil $V_{k,\alpha}$ est fonction du nombre desdites pièces. En d'autres termes, le seuil $V_{k,\alpha}$ dépend non seulement du niveau de risque $\alpha$ de non-conformité acceptable mais aussi du nombre de pièces qui a déjà été contrôlé, c'est-à-dire de k. Le seuil $V_{k,\alpha}$ peut ainsi être un multiple de $\alpha$ et de k, c'est-à-dire que $V_{k,a} = m' \times k \times \alpha$ où $m'$ est un nombre réel convenablement choisi. On peut par exemple retenir une valeur de $m' = 1$, c'est-à-dire que $V_{k,a} = k \times \alpha$.

La valeur $VNC_k$ peut être une somme pondérée de ces risques de non-conformité, c'est-à-dire que

$$VNC_k = \sum_{j=1}^{k} a_j TNC_j$$ où les $a_j$ sont des nombres réels. Le deuxième critère peut alors s'écrire

$$\sum_{j=1}^{k} a_j TNC_j < m' \times k \times \alpha$$ .

De préférence, la valeur $VNC_k$ est seulement fonction du risque de non-conformité estimé $TNC_k$ et des risques de non-conformité estimés des pièces pour lesquelles le critère de décision a été précédemment satisfait, c'est-à-dire que $a_j = 0$ s'il a été procédé à une mesure de la caractéristique $X$ sur la pièce $j$. De cette manière, la valeur $VNC_k$ est représentative du risque cumulé de non-conformité lié au fait que l'on n'ait pas effectivement contrôlé un certain nombre de pièces avant la pièce k.

En outre, dans ce cas, la valeur $VNC_k$ peut par exemple tenir compte de façon égale des risques de non-conformité de chacune des pièces pour lesquelles le critère de décision a été précédemment satisfait, c'est-à-dire que $a_j = 0$ s'il a été procédé à une mesure de la caractéristique $X$ sur la pièce $j$ et $a_j = 1$ sinon. De cette manière, le risque cumulé de non-conformité que représente la valeur $VNC_k$ est rapporté au nombre de pièces avant la pièce k qui n'ont pas été effectivement contrôlées. Il est toutefois possible de pondérer la valeur $VNC_k$ autrement, par exemple en prévoyant des valeurs de $a_j$ plus faibles à mesure que $j$ diminue, voire même nulles pour toutes les valeurs de $j$ inférieures à un certain entier.

En prévoyant le deuxième critère, on procède à un contrôle effectif de la pièce k dès que l'accumulation des risques de non-conformité sur la pièce k et les pièces qui n'ont pas été effectivement contrôlées dépasse un certain seuil. Ceci contribue à rendre le procédé de contrôle 10 encore plus robuste aux dérives de production.

Le procédé de contrôle 10 qui vient d'être décrit peut s'inscrire dans le cadre d'une procédé de suivi de fabrication de pièces 10P. Ce procédé de suivi comprend la fourniture d'une pluralité de pièces k, k étant compris entre 1 et Q, et le contrôle de la conformité de chaque pièce k par le procédé de contrôle 10 précédemment exposé. L'itération du procédé de contrôle 10 pour chaque pièce k est représentée, sur la figure 1, par l'étape d'incrémentation 32.

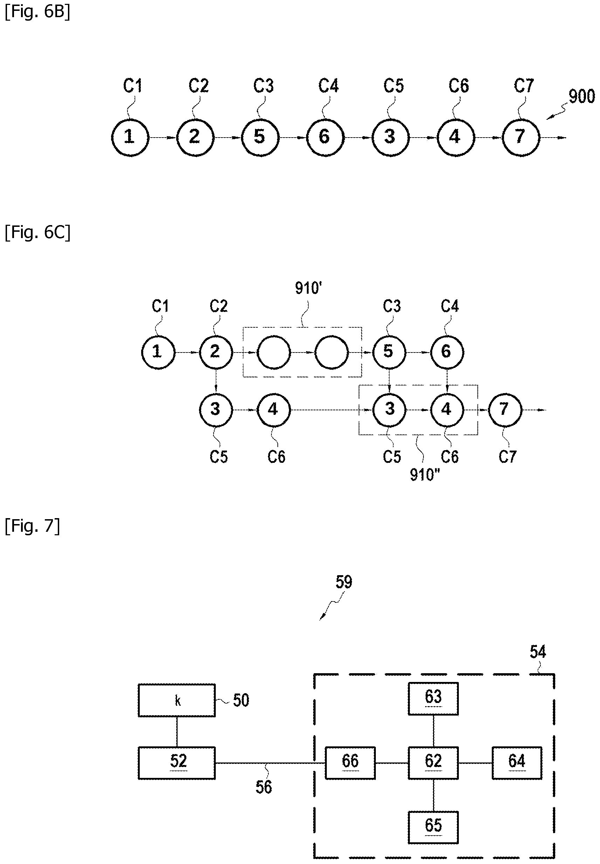

Le procédé de contrôle 10 et/ou le procédé de suivi 10P peut être mis en oeuvre par un dispositif de contrôle 59 tel que représenté à la figure 7. Le dispositif de contrôle 59 comprend en l'espèce une machine de mesure 52 configurée pour mesurer une valeur de la caractéristique de la pièce 50, un module de contrôle 54 et des moyens de transmission 56 configurés pour transmettre des valeurs mesurées de la machine de mesure 52 au module de contrôle 54 et transmettre des instructions du module de contrôle 54 à la machine de mesure 52.

Le module de contrôle 54 est configuré pour estimer un risque de non-conformité de la caractéristique sur la base d'une loi de probabilité associée à la caractéristique, pour vérifier si le risque de non-conformité estimé satisfait un critère de décision et pour, dans l'affirmative, déclarer que la pièce 50 est conforme pour la caractéristique ; le module de contrôle 54 étant configuré pour, dans la négative, commander à la machine de mesure 52 de mesurer une valeur de la caractéristique, pour déterminer si la pièce est conforme ou non sur la base de la valeur ainsi mesurée, et pour mettre à jour la loi de probabilité associée à la caractéristique sur la base de la valeur ainsi mesurée.

Le module de contrôle 54 dispose ici de l'architecture matérielle d'un ordinateur, telle qu'illustrée schématiquement à la figure 7. Il comporte notamment un processeur 62, une mémoire morte 63, une mémoire vive 64, une mémoire non volatile 65 et des moyens de communication 66 avec la machine de mesure 52 permettant au module de contrôle 59 d'obtenir les mesures réalisées par la machine de mesure 52 en réponse aux instructions du module de contrôle 59. Le module de contrôle 59 et la machine de mesure 52 sont par exemple reliés par un bus de données numériques ou une interface série (ex. interface USB (Universal Serial Bus)) ou sans fil connu(e) en soi.

La mémoire morte 63 du module de contrôle 59 constitue un support d'enregistrement conforme à l'invention, lisible par le processeur 62 et sur lequel est enregistré un programme d'ordinateur conforme à l'invention, comportant des instructions pour l'exécution des étapes d'un procédé de contrôle et/ou de suivi selon l'invention décrites précédemment en référence à la figure 1.

Ce programme d'ordinateur définit, de façon équivalente, des modules fonctionnels du module de contrôle 59 aptes à mettre en oeuvre les étapes du procédé de contrôle 10.

On va maintenant décrire un procédé de contrôle de conformité de pièce 110 selon un deuxième mode de réalisation en référence aux figures 2 à 4D.

Dans ce deuxième mode de réalisation, la pièce k présente p caractéristiques $X^1$, ...,$X^p$ où p est un nombre entier au moins égal à 2. Dans la suite, les notations présentant en indice la lettre k se rapportent à la pièce k dont on contrôle la conformité au cours du procédé de contrôle 110, et les notations présentant un nombre i en exposant se rapportent à la i-ème des p caractéristiques $X^1$, ...,$X^p$ de la pièce k dont on contrôle la conformité au cours du procédé de contrôle 110.

Dans un exemple, les p caractéristiques $X^1$, ... , $X^p$ sont chacune des cotes dimensionnelles mesurées sur la pièce k.

La figure 2 illustre schématiquement les étapes du procédé de contrôle 110.

Sur la figure 2, les étapes analogues à celles du premier mode de réalisation sont indiquées par le même numéro de référence que sur la figure 1, à ceci près que ce numéro de référence est augmenté de 100.

Le procédé de contrôle 110 comprend ainsi une étape 112 de fourniture de la pièce k, une étape d'estimation 114, une étape de vérification 116, une étape de contrôle 122, une étape 118 dans laquelle la pièce k est déclarée conforme pour la caractéristique $X^i$, une étape 119 dans laquelle la pièce k est déclarée non conforme pour la caractéristique $X^i$, et une étape d'incrémentation 132.

Ces étapes sont analogues à celles du premier mode de réalisation, à ceci près qu'elles sont effectuées pour chacune des caractéristiques $X^1$, ...,$X^p$ et non pour une seule caractéristique $X$.

En pratique, il se peut que les caractéristiques $X^1$, ... , $X^p$ dépendent des mêmes opérations de mesure pouvant être effectuées sur la pièce k. Par exemple, lorsque les p caractéristiques $X^1$, ...,$X^p$ sont chacune des cotes dimensionnelles mesurées sur la pièce k, ces cotes dimensionnelles peuvent dépendre de la mesure des mêmes éléments géométriques sur la pièce k, en particulier lorsque p est grand.

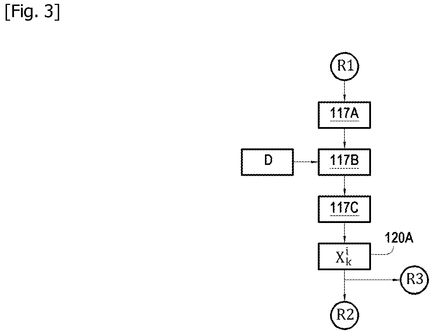

Pour tenir compte de cette situation, des étapes de prétraitement sont effectuées avant d'effectuer les mesures sur la pièce k. Ces étapes sont détaillées sur le schéma-blocs de la figure 3.

Lorsque le critère de décision n'est pas satisfait pour au moins une des p caractéristiques (étape 116, figure 2), le procédé 110 passe (repère R1, figures 2 et 3) à l'étape 117A, dans laquelle on établit la liste des caractéristiques $X^1$, ... , $X^p$ pour lesquelles le critère de décision n'est pas satisfait.

Le procédé 110 passe ensuite à l'étape 117B, dans laquelle on établit une liste d'opérations de mesure à effectuer sur la pièce k. Cette liste d'opérations de mesure est établie sur la liste établie à l'étape 117A et d'un arbre de dépendance D associant chacune des p caractéristiques $X^1$, ... , $X^p$ à au moins une opération de mesure $M^1$, ... , $M^n$ pouvant être effectuée sur la pièce k. L'arbre de dépendance D est établi à l'avance lors de la spécification des caractéristiques $X^1$, ... , $X^p$ à contrôler, et peut donc être stocké en mémoire. On remarquera que n n'est pas nécessairement égal à p.

Le procédé 110 passe ensuite à l'étape 117C, dans laquelle on établit en outre une liste de caractéristiques supplémentaires de la pièce k. Cette liste de caractéristiques supplémentaires comprend au moins une partie, et de préférence la totalité, des caractéristiques pouvant être mesurées en effectuant les opérations de mesure de la liste établie à l'étape 117B, et ce indépendamment du fait que ces caractéristiques supplémentaires aient vérifié le critère de décision.

Le procédé 110 passe ensuite à l'étape de mesure 120A, dans laquelle on mesure une valeur de chacune des caractéristiques des listes établies à l'étape 117A et à l'étape 117C.

Une fois l'étape de mesure 120A effectuée, le procédé 120 passe (repères R2 et R3 sur les figures 2 et 3) aux étapes de contrôle 122 et de mise à jour 124 pour chacune ces caractéristiques mesurées à l'étape 120A.

De cette manière, le procédé 110 bénéficie des informations apportées par les mesures des caractéristiques supplémentaires, et ce même si le critère de décision a indiqué qu'il n'était pas nécessaire de les mesurer. Le procédé 110 tire ainsi parti au maximum des résultats des mesures que le critère de décision indique d'effectuer. Ceci est particulièrement avantageux puisqu'une opération de mesure, telle qu'une mesure d'élément géométrique, sur la pièce k, est coûteuse en temps. En outre, le procédé 110 tient compte de davantage d'informations apportées par les opérations de mesure, ce qui contribue à le rendre encore plus robuste.

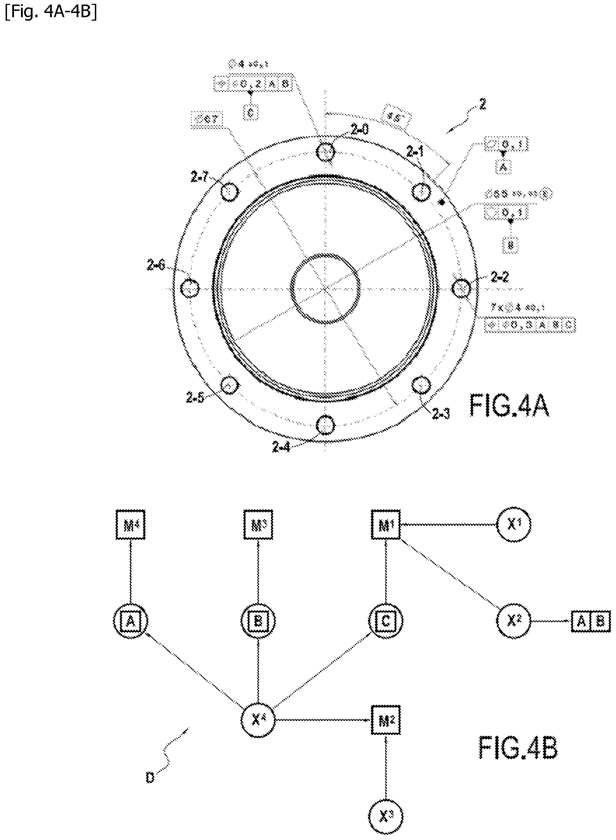

Afin de faciliter la compréhension de ce qui vient d'être expliqué, on en donne une illustration sur un exemple concret, qui est illustré sur les figures 4A à 4D.

Sur la figure 4A, on a représenté à titre d'exemple très simplifié une pièce 2 constituée d'un disque présentant huit perçages 2-0, 2-1, 2-2, 2-3, 2-4, 2-5, 2-6, 2-7. On a aussi indiqué sur la figure 4A un exemple de cotation géométrique de la pièce 2, selon les normes ISO 8015 et ISO 1101.

Sur la figure 4B, on a représenté un exemple d'arbre de dépendance D. Dans cet exemple, on ne s'intéresse qu'au contrôle de la cotation géométrique des perçages 2-0 et 2-1, étant entendu que cet exemple peut sans peine être généralisé au contrôle de la cotation géométrique des perçages 2-0 à 2-7, et par suite à la cotation géométrique d'une pièce plus complexe. Dans cet exemple, puisqu'on cherche à contrôler la cotation géométrique des perçages 2-0 et 2-1, on a défini quatre caractéristiques $X^1$, $X^2$, $X^3$ et $X^4$ qui sont définies dans le tableau 1 ci-dessous.

[Tableau 1]

| Référence de la caractéristique | Signification de la caractéristique |
|---|---|
| $X^1$ | Diamètre du perçage 2-0 |
| $X^2$ | Localisation du perçage 2-0 |
| $X^3$ | Diamètre du perçage 2-1 |
| $X^4$ | Localisation du perçage 2-1 |

Comme on le comprendra en se référant aux figures 4A et 4B, ces caractéristiques $X^1$, $X^2$, $X^3$ et $X^4$ dépendent du plan de référence A, du cylindre de référence B et du plan de référence C. Par suite, les caractéristiques $X^1$, $X^2$, $X^3$ et $X^4$ peuvent être contrôlées à l'aide de quatre opérations de mesure $M^1$, $M^2$, $M^3$ et $M^4$ qui sont définies dans le tableau 2 ci-dessous.

[Tableau 2]

| Référence de l'opération de mesure | Signification de l'opération de mesure |
|---|---|
| $M^1$ | Mesure du perçage 2-0 |
| $M^2$ | Mesure du perçage 2-1 |
| $M^3$ | Mesure du cylindre B |
| $M^4$ | Mesure du plan A |

Comme on l'a mentionné ci-dessus, l'arbre de dépendance D est établi à l'avance lors de la spécification des caractéristiques $X^1$, $X^2$, $X^3$ et $X^4$.

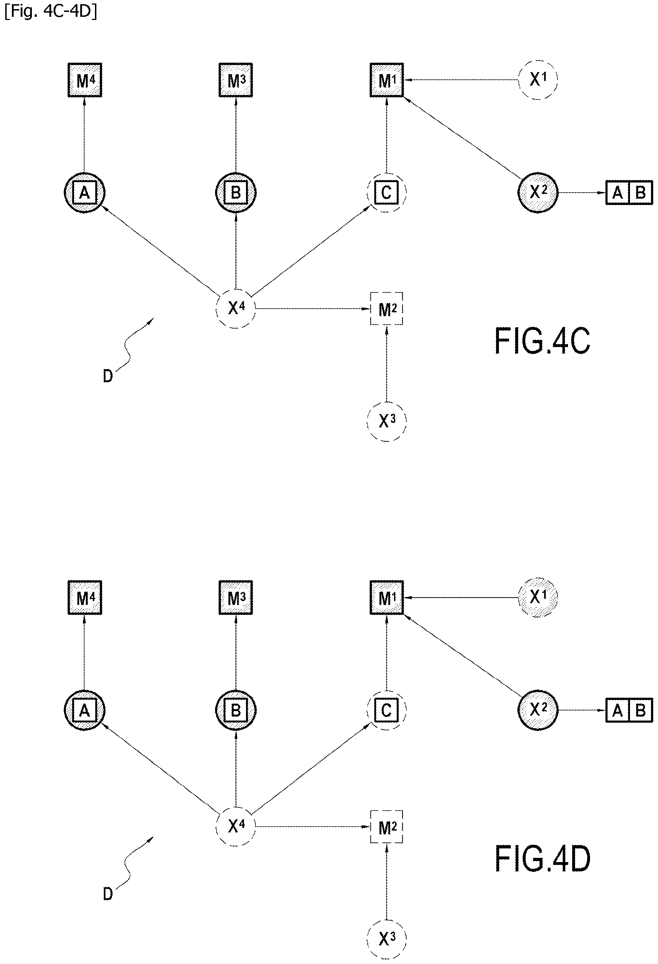

Les figures 4C et 4D sont des schémas analogues à la figures 4B représentant visuellement un exemple d'application de l'arbre de dépendance D.

Sur ces figures, on a supposé que les différents critères de décision indiquent qu'il est nécessaire de mesurer une valeur de la caractéristique $X^2$ (localisation du perçage 2-0) seulement (« non » à l'étape 116 pour la caractéristique $X^2$), et qu'il n'est pas nécessaire de mesurer une valeur des caractéristiques $X^1$, $X^3$ et $X^4$ (« oui » à l'étape 116 pour les caractéristiques $X^1$, $X^3$ et $X^4$). En conséquence, la liste de caractéristiques établie à l'étape 117A contient la seule caractéristique $X^2$. Celle-ci est représenté en grisé sur la figure 4C et 4D, les autres étant représentées en pointillés sur la figure 4C.

À l'aide de l'arbre D, on comprendra aisément que la caractéristique $X^2$ est associée aux opérations de mesure $M^1$, $M^3$ et $M^4$. En conséquence, la liste d'opérations de mesure établie à l'étape 117B contient les opérations de mesure $M^1$, $M^3$ et $M^4$. Celles-ci sont représentées en grisé sur les figures 4C et 4D, l'opération de mesure $M^2$ étant représentée en pointillés sur les figures 4C et 4D.

On comprend maintenant aisément que puisque la liste d'opérations de mesure établie à l'étape 117B comprend l'opération de mesure $M^1$, qui consiste à mesurer le perçage 2-0, cette opération de mesure $M^1$ permet aussi d'obtenir une information sur le diamètre du perçage 2-0, c'est-à-dire sur la caractéristique $X^1$. En conséquence, dans cet exemple, la liste de caractéristiques supplémentaires établie à l'étape 117C contient la caractéristique $X^1$, et ce indépendamment du fait que le critère de décision ait été vérifié pour la caractéristique $X^1$. Celle-ci est représentée en grisé et en pointillés sur la figure 4D.

Par suite, à l'étape de mesure 120A, en effectuant les opérations de mesure $M^1$, $M^3$ et $M^4$, on mesure une valeur des caractéristiques $X^1$ et $X^2$. On effectue ensuite les étapes suivantes du procédé 110 comme on l'a déjà expliqué ci-dessus.

Dans les premier et deuxième modes de réalisation, la conformité des pièces est contrôlée dans l'ordre dans lequel elles sont fournies, ce qui revient à incrémenter k de +1 dans les étapes d'incrémentation 32 et 132. Toutefois, en pratique, il se peut que les pièces soient contrôlées dans un ordre différent de celui dans lequel elles sont fournies, notamment en raison de l'organisation physique du poste de contrôle destiné à effectuer le procédé de contrôle de conformité. On va donc maintenant décrire des modes de réalisation capables de tenir compte de cette possibilité.

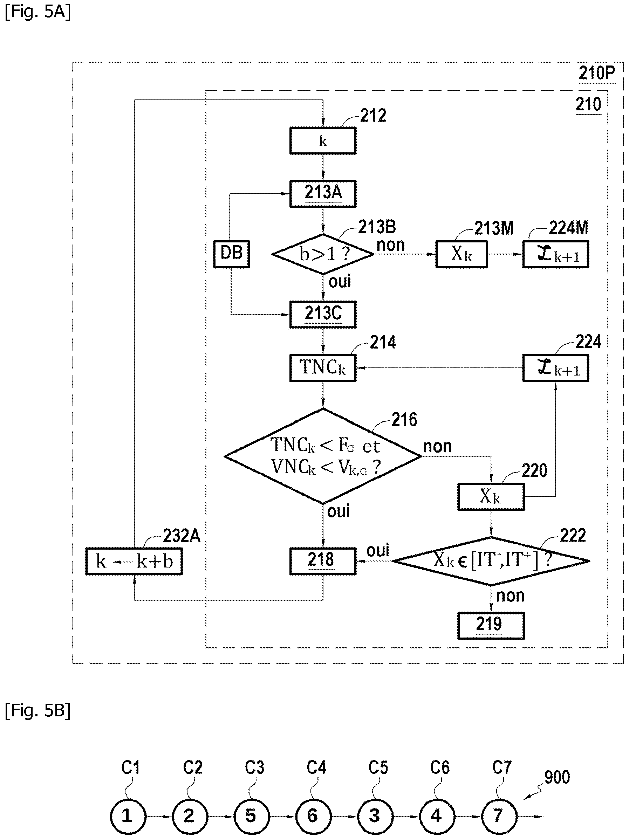

Les figures 5A à 5C illustrent un troisième mode de réalisation du procédé de contrôle de conformité.

Sur la figure 5A, les étapes analogues à celles du premier mode de réalisation sont indiquées par le même numéro de référence que sur la figure 1, à ceci près que ce numéro de référence est augmenté de 200.

Le procédé de contrôle 210 comprend ainsi une étape 212 de fourniture de la pièce k, une étape d'estimation 214, une étape de vérification 216, une étape de mesure 220, une étape de contrôle 222, une étape de mise à jour 224, une étape 218 dans laquelle la pièce k est déclarée conforme pour la caractéristique $X$, et une étape 219 dans laquelle la pièce k est déclarée non conforme pour la caractéristique $X$.

Comme mentionné précédemment, dans le procédé 210, on contrôle la conformité des pièces dans un ordre différent de celui dans lequel elles sont fournies. Ainsi, à l'étape d'incrémentation 232A, k n'est pas incrémenté de +1, mais d'un entier b non nul, qui peut être positif ou négatif.

La figure 5B fournit un exemple concret où les pièces sont contrôlées dans un ordre différent de celui dans lequel elles sont fournies. Sur la figure 5B, une séquence 900 de contrôles de conformité est schématisée par la chaîne de contrôles C1 à C7, et le rang de la pièce contrôlée à chaque contrôle est indiqué par un chiffre sur chacun des contrôles C1 à C7. Ainsi, au contrôle C1, on contrôle la pièce n°1 ; puis au contrôle C2, on contrôle la pièce n°2 ; puis au contrôle C3, on contrôle la pièce n°5 ; et ainsi de suite. En revenant à l'étape d'incrémentation 232A de la figure 5A, lorsque l'on arrive au contrôle C3, par exemple, k est incrémenté de b = +3 (puisque l'on passe de la pièce n°2 à la pièce n°5) ; lorsque l'on arrive au contrôle C5, k est incrémenté de b = -3 (puisque l'on passe de la pièce n°6 à la pièce n°3).

La séquence 900 de contrôles de conformité est mémorisée, au fur et à mesure de l'exécution du procédé de contrôle 210 et du procédé de suivi 210P, dans une base de données DB. La base de données DB peut en outre stocker les résultats des mesures effectuées aux étapes 213M et 220.

Après l'étape 212 de fourniture de la pièce k, le procédé 210 passe à une étape 213A pendant laquelle la séquence 900 de contrôles de conformité est lue dans la base de données DB.

Après l'étape 213A, le procédé 210 passe à une étape 213B pendant laquelle si la pièce k en train d'être contrôlée est contrôlée dans l'ordre contraire de celui dans lequel les pièces sont fournies. Par « contrôlée dans l'ordre contraire », on entend que la pièce k en train d'être contrôlée est d'un rang plus faible que celui de la pièce qui la précède. De manière équivalente, l'étape 213B revient à déterminer si b > 1 ou non.

Si la condition « b > 1 » est fausse (« non » à l'étape 213B), alors la pièce k en train d'être contrôlée est d'un rang plus faible que celui de la pièce qui la précède dans la séquence de contrôles 900. Toujours en prenant la séquence de contrôles 900 de la figure 5B à titre d'exemple, au contrôle C5, b = -3, et la pièce n°3 est contrôlée dans l'ordre contraire, puisque la pièce n°6 a été contrôlée avant, au contrôle C4. Dans ce cas, le procédé 210 passe à une étape 213M dans laquelle on mesure les valeurs de toutes les caractéristiques de la pièce k, indépendamment du risque de non-conformité estimé pour ces caractéristiques. Dans d'autres étapes non représentées sur les figures, on détermine et on déclare, sur la base des valeurs ainsi mesurées à l'étape 213M, si la pièce k est conforme ou non, de façon analogue aux étapes 222, 218 et 219. En outre, à l'étape 224M, la loi de probabilité $\mathcal{L}_k$ est mise à jour, seulement par application d'une dérive seulement par un mouvement brownien, afin d'obtenir une loi de probabilité mise à jour $\mathcal{L}_{k+1}$.

Si la condition « b > 1 » est vraie (« oui » à l'étape 213B), alors la pièce k en train d'être contrôlée est d'un rang plus élevé que celui de la pièce qui la précède dans la séquence de contrôles 900. Toujours en prenant la séquence de contrôles 900 de la figure 5B à titre d'exemple, au contrôle C3, b = +3, puisque la pièce n°2 a été contrôlée avant, au contrôle C2. Dans ce cas, le procédé 210 passe à une étape 213C dans laquelle on établit, en se basant sur la base de données DB, une liste de toutes les pièces de rang $j$ telles que $j < k$ et la pièce de rang $j$ n'a pas encore subi d'opération de contrôle.

Après l'étape 213C, le procédé 210 passe à l'étape 214 d'estimation du risque de non-conformité $TNC_k$ de la pièce k en train d'être contrôlée.

Après l'étape 214, le procédé 210 passe à l'étape 216 de vérification du critère de décision.

Le critère de décision comprend le premier critère décrit ci-dessus en rapport avec le premier mode de réalisation. Ce premier critère n'est pas décrit en détail à nouveau.

Le critère de décision comprend en outre un deuxième critère analogue à celui décrit ci-dessus en rapport avec le premier mode de réalisation, mais modifié pour tenir compte du fait que la pièce k en train d'être contrôlée est d'un rang plus élevé que celui de la pièce qui la précède dans la séquence de contrôles 900.

Plus concrètement, le deuxième critère consiste à vérifier que $VNC_k' < V_{k',\alpha}$, où

$$VNC'_k = \sum_{j=1}^{k} a_j TNC_j$$

, $V_{k,\alpha} = m' \times k' \times \alpha$, $k'$ est le nombre de pièces déjà contrôlées dans le procédé de suivi 210P, et dans le calcul de $VNC'_{k'}$, et la somme sur les $j$ est effectuée uniquement sur les pièces déjà contrôlées dans le procédé de suivi 210P. $k'$ et la liste des pièces déjà contrôlées dans le procédé de suivi 210P sont obtenus en se basant sur la base de données DB.

Après l'étape 216, le procédé 210 passe aux étapes suivantes, qui sont identiques à celles du premier mode de réalisation et qui ne sont donc pas décrites en détail à nouveau.

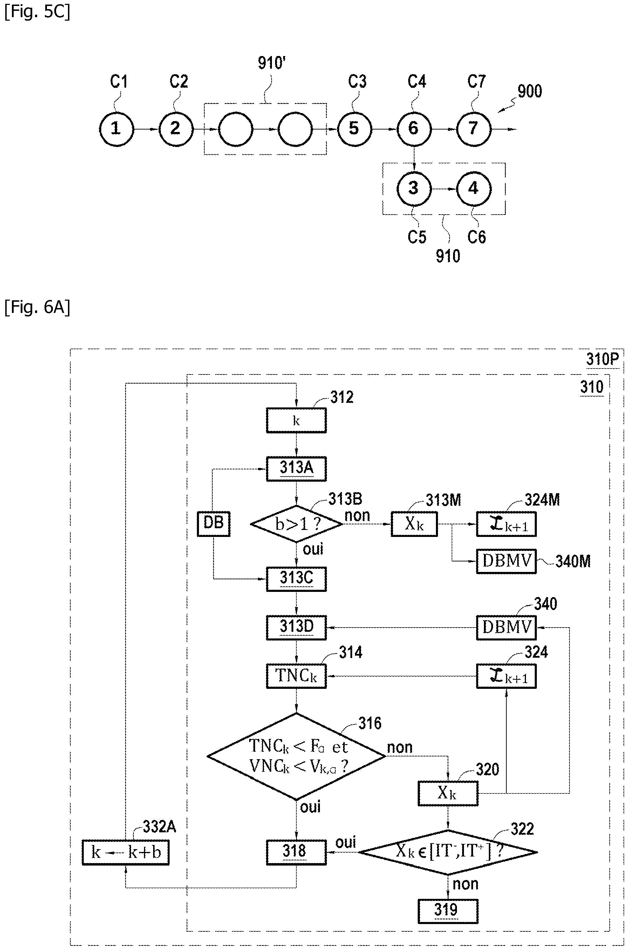

La figure 5C est un schéma analogue à celui de la figure 5B et est basé sur la même séquence de contrôle 900 que la figure 5B, à ceci près que les contrôles C1 à C7 ne sont pas illustrés dans l'ordre des contrôles C1 à C7 mais dans l'ordre des rangs des pièces contrôlées.

Comme représenté sur cette figure 5C, lors du contrôle C3 de la pièce n°5, les informations sur les pièces n°3 et n°4 ne sont pas encore disponibles. Lors de l'étape 216 lors du contrôle C3 de la pièce n°5, le critère de décision est donc établi en supposant que le critère de décision a été vérifié pour les pièces n°3 et n°4, comme indiqué par le repère 910' sur la figure 5C.

D'autre part, puisque les pièces n°3 et n°4 sont contrôlées dans l'ordre contraire, on mesure les valeurs de toutes les caractéristiques de ces pièces, indépendamment du risque de non-conformité estimé pour ces caractéristiques, comme indiqué par le repère 910 sur la figure 5C.

On notera que dans le troisième mode de réalisation, l'information fournie par les mesures effectuées sur les pièces n°3 et n°4 lors des contrôles C5 et C6 n'est pas prise en compte lors des contrôles C7 et suivants.

Les figures 6A à 6C illustrent un quatrième mode de réalisation du procédé de contrôle de conformité. Ce quatrième mode de réalisation, contrairement au troisième mode de réalisation, permet de prendre en compte l'information fournie par les mesures effectuées sur les pièces contrôlées dans l'ordre contraire.

Sur la figure 6A, les étapes analogues à celles du troisième mode de réalisation sont indiquées par le même numéro de référence que sur la figure 5A, à ceci près que ce numéro de référence est augmenté de 100.

Le procédé de contrôle 310 comprend ainsi une étape 312 de fourniture de la pièce k, une étape d'estimation 314, une étape de vérification 316, une étape de mesure 320, une étape de contrôle 322, une étape de mise à jour 324, une étape 318 dans laquelle la pièce k est déclarée conforme pour la caractéristique $X$, et une étape 319 dans laquelle la pièce k est déclarée non conforme pour la caractéristique $X$.

Le procédé de contrôle 310 comprend en outre des étapes 313A, 313B, 313C, 313M et 324M analogues aux étapes 213A, 213B 213C, 213M et 224M du procédé de contrôle 210. Ces étapes ne sont donc pas décrites en détail à nouveau. Toutefois, après l'étape 313M, les résultats des mesures effectuées à l'étape 313M sont enregistrées dans une base de données de mesure DBMV dans laquelle sont enregistrées toutes les valeurs mesurées précédemment de la caractéristique $X$. La base de données de mesure DBMV est typiquement incluse dans la base de données DB.

Toutefois, le procédé de contrôle 310 diffère du procédé de contrôle 210 en ce que, si la condition « b > 1 » est fausse (« non » à l'étape 313B), alors le procédé 310 passe à l'étape 313M.

En outre, si la condition « b > 1 » est vraie (« oui » à l'étape 313B), alors le procédé 310 passe à l'étape 313C, laquelle est suivie d'une étape 313D.

À l'étape 313D, le procédé lit la base de données de mesure DBMV, et met à jour la loi de probabilité $\mathcal{L}_k$ associée à la caractéristique $X$ sur la base des valeurs mesurées mises dans la base de données de mesure DBMV.

Après l'étape 313D, le procédé 310 passe à l'étape 314 d'estimation du risque de non-conformité $TNC_k$ de la pièce k en train d'être contrôlée. Après l'étape 314, le procédé 310 passe à l'étape 316 de vérification du critère de décision. L'étape 316 est identique à l'étape 216 et n'est donc pas décrite en détail à nouveau.

Après l'étape 316, le procédé 310 passe aux étapes suivantes, qui sont identiques à celles du troisième mode de réalisation et qui ne sont donc pas décrites en détail à nouveau, à ceci près que, lorsqu'une valeur de la caractéristique $X$ est mesurée à l'étape de mesure 320, le procédé 310 comprend en outre une étape 340 dans laquelle la valeur mesurée est ajoutée à la base de données de mesure DBMV.

La figure 6B reprend la même séquence de contrôle 900 que la figure 5B, et la figure 6C est un schéma analogue à celui de la figure 6B et est basé sur la même séquence de contrôle 900 que la figure 6B, à ceci près que les contrôles C1 à C7 ne sont pas illustrés dans l'ordre des contrôles C1 à C7 mais dans l'ordre des rangs des pièces contrôlées.

Comme représenté sur cette figure 6C, et comme dans le troisième mode de réalisation, lors du contrôle C3 de la pièce n°5, les informations sur les pièces n°3 et n°4 ne sont pas encore disponibles. Lors de l'étape 316 lors du contrôle C3 de la pièce n°5, le critère de décision est donc établi en supposant que le critère de décision a été vérifié pour les pièces n°3 et n°4, comme indiqué par le repère 910' sur la figure 6C.

D'autre part, puisque les valeurs mesurées le cas échéant lors des contrôles C3 et C4 des pièces n°5 et n°6 et des contrôles C5 et C6 des pièces n°3 et n°4, sont mises en mémoire dans la base données de mesure DBMV, lors du contrôle C7 de la pièce n°7, ces valeurs sont lues dans la base de données DBMV, comme indiqué par le repère 910" sur la figure 6C. Ceci permet de mettre à jour la loi de probabilité associée à la caractéristique $X$ avant d'estimer le risque de non-conformité de la pièce n°7. Cette estimation étant basée sur davantage de points de données de mesures, elle est plus fiable. Il ressort de ce qui précède que le procédé 310 est encore plus robuste aux dérives de production.

Bien que cela ne soit pas représenté sur les figures 5A et 6A, les procédés de contrôles 210 et 310 et les procédés de suivi correspondants 210P et 310P peuvent bien entendu être généralisés au cas où on ne contrôle pas une caractéristique $X$ mais p caractéristiques $X^1, ... , X^p$ de la pièce k comme dans le deuxième mode de réalisation. Dans ce cas, les procédés de contrôles 210 et 310 comprennent des étapes analogues aux étapes 117A, 117B, 117C et 120A, les autres étapes étant adaptées comme dans le deuxième mode de réalisation.

En outre, il est bien entendu que le dispositif de contrôle 59 peut être configuré pour mettre en oeuvre les procédés des deuxième, troisième et quatrième modes de réalisation, en adaptant convenablement le module de contrôle 54 et/ou le programme d'ordinateur qu'il exécute.

Bien que la présente invention ait été décrite en se référant à des exemples de réalisation spécifiques, des modifications peuvent être apportées à ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Procédé de contrôle (10) de conformité d'une pièce (k) présentant au moins une caractéristique ($X$), le procédé comprenant les étapes suivantes :

   - estimer (14) un risque de non-conformité ($TNC_k$) de la caractéristique ($X$) sur la base d'une loi de probabilité ($\mathcal{L}_k$) associée à la caractéristique ; et

   - vérifier (16) si le risque de non-conformité estimé ($TNC_k$) satisfait un critère de décision et, dans l'affirmative, déclarer que la pièce est conforme pour la caractéristique ($X$) ; dans la négative, mesurer (20) une valeur de la caractéristique, déterminer si la pièce est conforme ou non sur la base de la valeur ainsi mesurée, et mettre à jour (24) la loi de probabilité ($\mathcal{L}_k$) associée à la caractéristique ($X$) sur la base de la valeur ainsi mesurée.

2. Procédé selon la revendication 1, dans lequel le critère de décision comprend un premier critère consistant à vérifier que le risque de non-conformité estimé ($TNC_k$) est inférieur à un seuil fixe ($F_\alpha$).

3. Procédé selon la revendication 1 ou 2, dans lequel le critère de décision comprend un deuxième critère consistant à vérifier qu'une valeur ($VNC_k$) qui est fonction du risque de non-conformité estimé et des risques de non-conformité estimés des pièces pour lesquelles le critère de décision a été précédemment appliqué est inférieure à un seuil ($V_{k,\alpha}$) qui est fonction du nombre desdites pièces.

4. Procédé selon la revendication 3, dans lequel ladite valeur ($VNC_k$) est seulement fonction du risque de non-conformité estimé et des risques de non-conformité estimés des pièces pour lesquelles le critère de décision a été précédemment satisfait.

5. Procédé selon l'une quelconque des revendications 1 à 4, dans lequel la loi de probabilité ($\mathcal{L}_k$) est mise à jour par une méthode de Monte Carlo séquentielle.

6. Procédé selon l'une quelconque des revendications 1 à 5, dans lequel la pièce présente p caractéristiques ($X^1, ...,X^p$), où p est un nombre entier au moins égal à 2, et les étapes d'estimation d'un risque de non-conformité (14) et de vérification d'un critère de décision (16) sont effectuées pour chacune des p caractéristiques.

7. Procédé (110) selon la revendication 6, dans lequel, lorsque le critère de décision n'est pas satisfait pour au moins une des p caractéristiques :

- on établit (117A) une liste desdites au moins une caractéristiques pour lesquelles le critère de décision n'est pas satisfait,

- on établit (117B) une liste d'opérations de mesure sur la base de ladite liste desdites au moins une caractéristiques pour lesquelles le critère de décision n'est pas satisfait et d'un arbre de dépendance (D) associant chacune des p caractéristiques $(X^1,...,X^p)$ à au moins une opération de mesure $(M^1, ...,M^n)$ pouvant être effectuée sur la pièce,

- on établit en outre une liste de caractéristiques supplémentaires de la pièce, ladite liste de caractéristiques supplémentaires comprenant au moins une partie des caractéristiques pouvant être mesurées en effectuant les opérations de mesure de ladite liste d'opérations de mesure, sur la base de ladite liste d'opérations de mesure ;

- on mesure une valeur de chacune desdites au moins une caractéristiques pour lesquelles le critère de décision n'est pas satisfait et une valeur de chacune des caractéristiques de ladite liste de caractéristiques supplémentaire, et

- on met à jour chacune des lois de probabilité associées à chacune desdites au moins une caractéristiques pour lesquelles le critère de décision n'est pas satisfait et chacune des lois de probabilités associées auxdites caractéristiques supplémentaires sur la base des valeurs ainsi mesurées.

8. Procédé (10P) de suivi de fabrication de pièces, comprenant les étapes suivantes :

- fournir une pluralité de pièces (k) du même type et présentant chacune au moins une caractéristique (X) ; et
- contrôler la conformité de chacune desdites pièces par le procédé de contrôle (10) selon l'une quelconque des revendications 1 à 7.

9. Procédé (210P) selon la revendication 8, dans lequel on contrôle la conformité de chacune desdites pièces (k) dans un ordre différent de celui dans lequel elles sont fournies, et on mesure (213M) une valeur de la au moins une caractéristique de chacune des pièces qui est contrôlée dans l'ordre contraire de celui dans lequel elles sont fournies, indépendamment du risque de non-conformité estimé pour chacune desdites au moins une caractéristique.

10. Procédé (310P) selon la revendication 8, dans lequel on contrôle la conformité de chacune desdites pièces dans un ordre différent de celui dans lequel elles sont fournies, on met en mémoire (340) toutes les valeurs mesurées, et, avant d'estimer le risque de non-conformité d'une pièce, on met à jour (313D) la loi de probabilité associée à chacune desdites au moins une caractéristiques de ladite pièce sur la base des valeurs mesurées mises en mémoire.

11. Dispositif (59) de contrôle de conformité d'une pièce (50) présentant au moins une caractéristique (X), comprenant une machine de mesure (52) configurée pour mesurer une valeur de ladite au moins une caractéristique, un module de contrôle (54), des moyens de transmission (56) configurés pour transmettre des valeurs mesurées de la machine de mesure (52) au module de contrôle (54) et transmettre des instructions du module de contrôle (54) à la machine de mesure (52), le module de contrôle (54) étant configuré pour estimer (14) un risque de non-conformité $(TNC_k)$ de la caractéristique (X) sur la base d'une loi de probabilité ( $\mathcal{L}_k$ ) associée à la caractéristique (X), pour vérifier si le risque de non-conformité estimé satisfait un critère de décision et pour, dans l'affirmative, déclarer que la pièce est conforme pour la caractéristique ; le module de contrôle (54) étant configuré pour, dans la négative, commander à la machine de mesure (52) de mesurer une valeur de la caractéristique, pour déterminer si la pièce est conforme ou non sur la base de la valeur ainsi mesurée, et pour mettre à jour la loi de probabilité ( $\mathcal{L}_k$ ) associée à la caractéristique (X) sur la base de la valeur ainsi mesurée.

12. Programme comportant des instructions pour l'exécution des étapes du procédé de contrôle selon l'une quelconque des revendications 1 à 7 lorsque ledit programme est exécuté par un ordinateur ou par un microprocesseur.

13. Programme comportant des instructions pour l'exécution des étapes du procédé de suivi selon l'une quelconque des revendications 8 à 10 lorsque ledit programme est exécuté par un ordinateur ou par un microprocesseur.

**Patentansprüche**

1. Verfahren zur Überprüfung (10) der Konformität eines Werkstücks (k), das zumindest eine Eigenschaft (X) aufweist, wobei das Verfahren die folgenden Schritte umfasst:

- Abschätzen (14) eines Risikos der Nicht-Konformität ($TNC_k$) der Eigenschaft ($X$) auf Grundlage eines Gesetzes der Wahrscheinlichkeit ( $\mathcal{L}_k$ ), das der Eigenschaft zugeordnet ist, und
- Verifizieren (16), ob das abgeschätzte Risiko der Nicht-Konformität ($TNC_k$) ein Entscheidungskriterium erfüllt, und bei einem positiven Ergebnis Erklären, dass das Werkstück bezüglich der Eigenschaft ($X$) konform ist, bei einem negativen Ergebnis Messen (20) eines Werts der Eigenschaft, Bestimmen, ob das Werkstück konform ist oder nicht, auf Grundlage des so gemessenen Werts, und Aktualisieren (24) des Gesetzes der Wahrscheinlichkeit ( $\mathcal{L}_k$ ), das der Eigenschaft ($X$) zugeordnet ist, auf Grundlage des so gemessenen Werts.

2. Verfahren nach Anspruch 1, wobei das Entscheidungskriterium ein erstes Kriterium umfasst, das darin besteht, zu verifizieren, dass das abgeschätzte Risiko der Nicht-Konformität ($TNC_k$) geringer ist als eine fixe Schwelle ($F_\alpha$).

3. Verfahren nach Anspruch 1 oder 2, wobei das Entscheidungskriterium ein zweites Kriterium umfasst, das darin besteht, zu verifizieren, dass ein Wert ($VNC_k$), der eine Funktion des abgeschätzten Risikos der Nicht-Konformität und von abgeschätzten Risiken der Nicht-Konformität von Werkstücken ist, für welche das Entscheidungskriterium früher angewandt wurde, geringer ist als eine Schwelle ($Vk,_a$), die eine Funktion der Anzahl der Werkstücke ist.

4. Verfahren nach Anspruch 3, wobei der Wert ($VNC_k$) eine Funktion nur des abgeschätzten Risikos der Nicht-Konformität und der abgeschätzten Risiken der Nicht-Konformität der Werkstücke ist, für welche das Entscheidungskriterium früher erfüllt wurde.

5. Verfahren nach einem der Ansprüche 1 bis 4, wobei das Gesetz der Wahrscheinlichkeit ( $\mathcal{L}_k$ ) mittels eines sequenziellen Monte-Carlo-Verfahrens aktualisiert wird.

6. Verfahren nach einem der Ansprüche 1 bis 5, wobei das Werkstück p Eigenschaften ($X^1$, ..., $X^p$) aufweist, wobei p eine ganze Zahl zumindest gleich 2 ist, und die Schritte der Abschätzung eines Risikos der Nicht-Konformität (14) und der Verifikation eines Entscheidungskriteriums (16) für jede der p Eigenschaften durchgeführt werden.

7. Verfahren (110) nach Anspruch 6, wobei, wenn das Entscheidungskriterium nicht für zumindest eine der p Eigenschaften erfüllt wird:

- eine Liste der zumindest einen Eigenschaft(en), für welche das Entscheidungskriterium nicht erfüllt wird, erstellt wird (117A),
- eine Liste von Messvorgängen erstellt wird (117B), auf Grundlage der zumindest einen Eigenschaft(en), für welche das Entscheidungskriterium nicht erfüllt wird, und eines Abhängigkeitsbaums (D), der jede der p Eigenschaften ($X^1$, ..., $X^p$) zumindest einem Messvorgang ($M^1$, ..., $M^n$) zuordnet, der an dem Werkstück durchgeführt werden kann,
- ferner eine Liste von zusätzlichen Eigenschaften des Werkstücks erstellt wird, wobei die Liste der zusätzlichen Eigenschaften zumindest einen Teil der Eigenschaften umfasst, die gemessen werden können, indem die Messvorgänge der Liste von Messvorgängen durchgeführt werden, auf Grundlage der Liste von Messvorgängen,
- ein Wert einer jeden der zumindest einen Eigenschaft(en), für welche das Entscheidungskriterium nicht erfüllt wird, und ein Wert für jede der Eigenschaften der Liste der zusätzlichen Eigenschaften gemessen wird, und
- jedes der Gesetze der Wahrscheinlichkeit, die der/den zumindest einen Eigenschaft(en), für welche das Entscheidungskriterium nicht erfüllt wird, zugeordnet sind, und jedes der Gesetze der Wahrscheinlichkeit, die den zusätzlichen Eigenschaften zugeordnet sind, auf Grundlage der so gemessenen Werte aktualisiert wird.

8. Verfahren (10P) zur Nachverfolgung der Herstellung von Werkstücken, umfassend die folgenden Schritte:

- Bereitstellen von mehreren Werkstücken (k) desselben Typs, die jeweils zumindest eine Eigenschaft ($X$) aufweisen, und
- Überprüfen der Konformität eines jeden der Werkstücke durch das Verfahren zur Überprüfung (10) nach einem der Ansprüche 1 bis 7.

9. Verfahren (21 0P) nach Anspruch 8, wobei die Konformität eines jeden der Werkstücke (k) in einer unterschiedlichen Reihenfolge als jener, in welcher sie bereitgestellt werden, überprüft wird, und ein Wert der zumindest einen Eigenschaft eines jeden der Werkstücke, das überprüft wird, in der Reihenfolge gemessen (213M) wird, die jener, in welcher sie bereitgestellt werden, entgegenläuft, unabhängig von dem für eine jede der zumindest einen Eigenschaft abgeschätzten Risiko der Nicht-Konformität.

10. Verfahren (31 0P) nach Anspruch 8, wobei die Konformität eines jeden der Werkstücke in einer unterschiedlichen Reihenfolge als jener, in welcher sie bereitgestellt werden, überprüft wird, alle gemessenen Werte gespeichert (340) werden, und vor dem Abschätzen des Risikos der Nicht-Konformität eines Werkstücks das Gesetz der Wahrscheinlichkeit, das einer jeden der zumindest einen Eigenschaft(en) des Werkstücks zugeordnet ist, auf Grundlage der gemessenen und gespeicherten Werte aktualisiert wird (313D).

11. Vorrichtung (59) zur Überprüfung der Konformität eines Werkstücks (50), das zumindest eine Eigenschaft (X) aufweist, umfassend eine Messmaschine (52), die dazu ausgestaltet ist, einen Wert der zumindest einen Eigenschaft zu messen, ein Steuermodul (54), Mittel zur Übertragung (56), die dazu ausgestaltet sind, die gemessenen Werte von der Messmaschine (52) an das Steuermodul (54) zu übertragen und Anweisungen von dem Steuermodul (54) an die Messmaschine (52) zu übertragen, wobei das Steuermodul (54) dazu ausgestaltet ist, ein Risiko der Nicht-Konformität ($TNC_K$) der Eigenschaft (X) auf Grundlage eines Gesetzes der Wahrscheinlichkeit ( $\mathcal{L}_k$ ), das der Eigenschaft (X) zugeordnet ist, abzuschätzen (14), um zu verifizieren, ob das abgeschätzte Risiko der Nicht-Konformität ein Entscheidungskriterium erfüllt, und um bei einem positiven Ergebnis zu erklären, dass das Werkstück bezüglich der Eigenschaft konform ist, wobei das Steuermodul (54) dazu ausgestaltet ist, bei einem negativen Ergebnis die Messmaschine (52) so zu steuern, dass sie einen Wert der Eigenschaft misst, um auf Grundlage des so gemessenen Werts zu bestimmen, ob das Werkstück konform ist oder nicht, und um das Gesetz der Wahrscheinlichkeit ( $\mathcal{L}_k$ ), das der Eigenschaft (X) zugeordnet ist, auf Grundlage des so gemessenen Werts zu aktualisieren.

12. Programm, das Anweisungen zur Ausführung der Schritte des Überprüfungsverfahrens nach einem der Ansprüche 1 bis 7 beinhaltet, wenn das Programm von einem Computer oder von einem Mikroprozessor ausgeführt wird.

13. Programm, das Anweisungen zur Ausführung der Schritte des Nachverfolgungsverfahrens nach einem der Ansprüche 8 bis 10 beinhaltet, wenn das Programm von einem Computer oder von einem Mikroprozessor ausgeführt wird.

**Claims**

1. A method (10) for checking the compliance of a workpiece (k) having at least one characteristic (X), the method comprising the following steps:

   - estimating (14) a risk of non-compliance ($TNC_k$) of characteristic (X) on the basis of a law of probability ( $\mathcal{L}_k$ ) associated with the characteristic; and
   - verifying (16) whether the estimated risk of non-compliance ($TNC_k$) satisfies a decision criterion and, if so, declaring that the workpiece is compliant for characteristic (X); if not, measuring (20) a value of the characteristic, determining whether or not the workpiece is compliant based on the measured value, and updating (24) the law of probability ( $\mathcal{L}_k$ ) associated with characteristic (X) based on the measured value.

2. The method according to claim 1, wherein the decision criterion comprises a first criterion whereby it is verified that the estimated risk of non-compliance ($TNC_k$) is lower than a fixed threshold ($F_\alpha$).

3. The method according to claim 1 or 2, wherein the decision criterion comprises a second criterion whereby it is verified that a value ($VNC_k$), that is a function of the estimated risk of non-compliance and of the estimated risks of non-compliance of workpieces for which the decision criterion has previously been applied, is lower than a threshold ($V_{k,a}$) which is a function of the number of said workpieces.

4. The method according to claim 3, wherein said value ($VNC_k$) is only a function of the estimated risk of non-compliance and of the estimated risks of non-compliance of workpieces for which the decision criterion has previously been satisfied.

**5.** The method according to any of claims 1 to 4, wherein the law of probability ( $\mathcal{L}_k$ ) is updated using a sequential Monte Carlo method.

**6.** The method according to any of claims 1 to 5, wherein the workpiece has p characteristics ($X^1,...,X^p$), where p is an integer of at least equal to 2, and the steps of estimation (14) of a risk of non-compliance and verification (16) of a decision criterion are performed for each of the p characteristics.

**7.** The method (110) according to claim 6 wherein, when the decision criterion is not satisfied for at least one of the p characteristics:

- a list (117A) of said at least one characteristic is defined for which the decision criterion is not satisfied;
- a list (117B) of measuring operations is defined on the basis of said list of said at least one characteristic for which the decision criterion is not satisfied, together with a dependency tree (D) associating each of the p characteristics ($X^1, ...,X^p$) with at least one measuring operation ($M^1, ..., M^n$) which can be performed on the workpiece;
- a list is also defined of additional characteristics of the workpiece, said list of additional characteristics comprising at least some of the characteristics able to be measured by performing the measuring operations in said list of measuring operations, on the basis of said list of measuring operations;
- a value is measured of each of said at least one characteristic for which the decision criterion is not satisfied, and a value of each of the characteristics in said list of additional characteristics; and
- each of the laws of probability is updated associated with each of said at least one characteristic for which the decision criterion is not satisfied and each of the laws of probability associated with said additional characteristics is updated, on the basis of the values thus measured.

**8.** A method (10P) for monitoring the production of workpieces, comprising the following steps:

- providing a plurality of workpieces (k) of same type and each having at least one characteristic (X); and
- checking the compliance of each of said workpieces with the checking method (10) according to any of claims 1 to 7.

**9.** The method (210P) according to claim 8, wherein the compliance of each of said workpieces (k) is checked in an order differing from the order in which they are provided, and a value of the at least one characteristic is measured (213M) for each of the workpieces checked in contrary order to the order in which they are provided, independently of the estimated risk of non-compliance for each of said at least one characteristic.

**10.** The method (310P) according to claim 8, wherein the compliance of each of said workpieces is checked in an order differing from the order in which they are provided, all the measured values are placed in memory (340) and, before estimating the risk of non-compliance of a workpiece, the law of probability associated with each of said at least one characteristic of said workpiece is updated (313D) on the basis of the measured values placed in memory.

**11.** A device (59) for checking the compliance of a workpiece (50) having at least one characteristic (X), comprising a measuring machine (52) configured to measure a value of said at least one characteristic, a command module (54), transmission means (56) configured to transmit measured values from the measuring machine (52) to the command module (54), and to transmit instructions from the command module (54) to the measuring machine (52), the command module (54) being configured to estimate (14) a risk of non-compliance ($TNC_k$) of characteristic (X) on the basis of a law of probability ( $\mathcal{L}_k$ ) associated with characteristic (X), to verify whether the estimated risk of non-compliance satisfies a decision criterion, and, if so, to declare that the workpiece is compliant for the characteristic; if not, the command module (54) being configured to instruct the measuring machine (52) to measure a value of the characteristic to determine whether or not the workpiece is compliant on the basis of the value thus measured, and to update the law of probability ( $\mathcal{L}_k$ ) associated with characteristic (X) on the basis of the value thus measured.

**12.** A programme comprising instructions for execution of the steps of the checking method according to any of claims 1 to 7, when said programme is executed by a computer or microprocessor.

13. A programme comprising instructions for execution of the steps of the monitoring method according to any of claims 8 to 10 when said programme is executed by a computer or microprocessor.

[Fig. 1]

[Fig. 2]

[Fig. 3]

[Fig. 4A-4B]

FIG.4A

FIG.4B

[Fig. 4C-4D]

FIG.4C

FIG.4D

[Fig. 5A]

[Fig. 5B]

[Fig. 5C]

[Fig. 6A]

[Fig. 6B]

[Fig. 6C]

[Fig. 7]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3063153 A1

- US 2018150038 A1